(19) Europäisches Patentamt European Patent Office Office européen des brevets

(11) **EP 3 665 450 B1**

(12) **EUROPÄISCHE PATENTSCHRIFT**

(45) Veröffentlichungstag und Bekanntmachung des Hinweises auf die Patenterteilung:
**23.07.2025 Patentblatt 2025/30**

(21) Anmeldenummer: **18765548.5**

(22) Anmeldetag: **12.08.2018**

(51) Internationale Patentklassifikation (IPC):
**G01H 13/00** *(2006.01)* **H04B 1/00** *(2006.01)*

(52) Gemeinsame Patentklassifikation (CPC):
**G01H 13/00; H04B 1/0003**

(86) Internationale Anmeldenummer:
**PCT/DE2018/100706**

(87) Internationale Veröffentlichungsnummer:
**WO 2019/034206 (21.02.2019 Gazette 2019/08)**

(54) **MESSVORRICHTUNG MIT EINEM PASSIVEN KOOPERATIVEN TARGET**

MEASURING APPARATUS WITH A PASSIVE COOPERATIVE TARGET

DISPOSITIF DE MESURE À CIBLE COOPÉRATIVE PASSIVE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **12.08.2017 DE 102017007594**

(43) Veröffentlichungstag der Anmeldung:
**17.06.2020 Patentblatt 2020/25**

(73) Patentinhaber: **Albert-Ludwigs-Universität Freiburg**
**79098 Freiburg (DE)**

(72) Erfinder:
• **AFTAB, Taimur**
**79098 Freiburg (DE)**
• **HOPPE, Joachim**
**79104 Freiburg (DE)**
• **SHI, Di**
**79106 Freiburg (DE)**
• **SCHOTT, Dominik Jan**
**79108 Freiburg (DE)**
• **REINDL, Leonhard**
**79117 Kirchzarten (DE)**

(74) Vertreter: **Pollard, Peter Julian**
**c/o IP.DESIGN**
**Kanzlei und Patentbüro**
**Arbonerstrasse 35**
**8580 Amriswil (CH)**

(56) Entgegenhaltungen:
**US-A1- 2006 267 772 US-A1- 2010 066 496**

• **TAIMUR AFTAB ET AL: "Ultrasonic Coupled Passive Wireless Oscillating Sensor System", PROCEEDINGS, vol. 1, no. 4, 1 January 2017 (2017-01-01), pages 574, XP055524772, DOI: 10.3390/proceedings1040574**
• **REINDL L ET AL: "Theory and application of passive SAW radio transponders as sensors", IEEE TRANSACTIONS ON ULTRASONICS, FERROELECTRICS AND FREQUENCY CONTROL, IEEE, US, vol. 45, no. 5, 1 September 1998 (1998-09-01), pages 1281 - 1292, XP011437821, ISSN: 0885-3010, DOI: 10.1109/58.726455**
• **BOCCARD JEAN-MICHEL ET AL: "High-Resolution, Far-Field, and Passive Temperature Sensing up to 700 [deg.]C Using an Isolated ZST Microwave Dielectric Resonator", IEEE SENSORS JOURNAL, IEEE SERVICE CENTER, NEW YORK, NY, US, vol. 16, no. 3, 1 February 2016 (2016-02-01), pages 715 - 722, XP011591988, ISSN: 1530-437X, [retrieved on 20160112], DOI: 10.1109/JSEN.2015.2487606**
• **AFTAB T ET AL: "A parallel plate dielectric resonator as a wireless passive strain sensor", 2015 IEEE SENSORS APPLICATIONS SYMPOSIUM (SAS), IEEE, 13 April 2015 (2015-04-13), pages 1 - 6, XP032788630, DOI: 10.1109/SAS.2015.7133576**

**Beschreibung**

Die vorliegende Erfindung betrifft ein System mit einem passiven kooperativen Target nach dem Oberbegriff des unabhängigen Anspruchs 1 sowie in seinen weiteren Ausbildungen im Sinne der abhängigen Ansprüche.

Der vorliegenden Erfindung liegt die Aufgabe zugrunde, ein besonders einfach handhabbares und kostengünstiges System mit einem passiven kooperativen Target als Messvorrichtung zur Verfügung zu stellen.

US 2010/066496 A1 offenbart einen indukivabfragbaren Identifikationstag (RFID), welcher zwei elektroakustische Wandler umfasst, wovon der erste mit einer Abfrageeinheit und der zweite mit einem Resonator verbunden ist, wobei der erste elektroakustische Wandler und der zweite elektroakustische Wandler einen akustischen Kanal bilden und der zweite elektroakustische Wandler mit dem Resonator ein passives kooperatives Target bildet, welches beim Empfang eines Abfragesignals der Abfrageeinheit über den akustischen Kanal ein Antwortsignal sendet und das Abfragesignal eine höhere Energie aufweist als das Antwortsignal.

Ähnlich zu drahtlosem passiven Messen mit akustischen Oberflächenwellenbauelementen gekoppelten Antenne, basiert der vorgestellte Ansatz auf einer Zeitbereichstrennung des gesendeten und reflektierten Signals. Das drahtlose Sensorsystem enthält ein Anregungs- und Empfangselement mit Signalverarbeitung am aktiven Teil und einen Transceiver mit einer oszillierenden Last auf dem passiven Sensorknoten. Der passive Sensorknoten besteht aus einem mit einem Abstrahlelement, d. h. einem Ultraschallwandler, elektrisch verbundenen Resonator. Diese Aufgabe wird bei einer Messvorrichtung der eingangs genannten Art erfindungsgemäß durch die Merkmale des kennzeichnenden Teils des unabhängigen Anspruchs 1 gelöst. Weitere Ausbildungen der Erfindung sind Gegenstand von Unteransprüche.

Im Sinne der Erfindung ist ein System vorzugsweise eine Messvorrichtung zur Messung einer gewünschten Messgröße wie beispielsweise Kraft, Temperatur, Strom, Spannung, Durchfluss, Feuchte, aber auch andere physikalische Größen, an einer, vorzugsweise zuvor ausgewählten, Messstelle. Ein solches erfindungsgemäße System umfasst einen ersten elektroakustischen Wandler, der mit einer Abfrageeinheit verbunden ist. Eine solche Abfrageeinheit ist vorzugsweise ein softwaredefiniertes Radarsystem, welches dem Prinzip von softwaredefiniertem Radio folgt.

Unter Software Defined Radio (SDR) fasst man Konzepte für Hochfrequenz-Sender und -Empfänger zusammen, bei denen kleinere oder größere Anteile der Signalverarbeitung mit Software verwirklicht werden. Die Analogkomponente kann ein Geradeausempfänger oder ein Überlagerungsempfänger (Superhet) sein. Vor allem Selektion und Modulation / Demodulation werden bei einem SDR mittels digitaler Signalverarbeitung verwirklicht.

Ein SDR-System führt einen Großteil der Signalverarbeitung mit einem Universalrechner, bei Bedarf kombiniert mit dedizierter Hardware wie Signalprozessoren und/oder FPGAs, aus. Empfängerbandbreiten von einigen 10 MHz lassen sich mit Universalrechnern wie PCs verwirklichen. Größere Bandbreiten und komplexere Verarbeitungsalgorithmen erfordern spezielle Prozessoren wie Signalprozessoren oder FPGAs. Wesentliche Eigenschaft ist, dass sich die unterschiedlichen Parameter des Funksystems wie die Modulation, unterschiedliche Bandbreiten, zeitliches Verhalten und unterschiedliche Kanalkodierungsverfahren, durch alleinige Änderung der Software implementieren lassen. SDR findet unter anderem im Bereich des Amateurfunks, des Militärs und im Mobilfunk Anwendung, aber auch zunehmend in zivilen Anwendungsbereichen wie in digitalen Rundfunkempfängern. Hier ist die Flexibilität und Implementierung. unterschiedlicher Protokollwechsel in Echtzeit von besonderem Nutzen. Ein gutes und anschauliches Beispiel ist die Realisierung der Basisstationen zellularer Netze als SDR. Diese könnten somit innerhalb kürzester Zeit kostengünstig auf neue Standards aufgerüstet werden. Die Hardware eines SDR besteht, umindest aus einem Sender- und Empfängermodul, sowie jeweils einem A/D- und D/A-Umsetzer und der dazwischenliegenden, softwarebasierten digitalen Signalverarbeitung. Die Signalverarbeitung ist dabei üblicherweise komplex, im Sinne, dass ein Signalpfad aus einem Paar von zwei parallel geführten reellen Zahlenfolgen besteht, welche auch als I/Q-Signal bezeichnet wird. Der einfachste und ideale SDR Empfänger würde aus einem Analog- Digital-Umsetzer mit Antenne bestehen. Die ausgelesenen Daten würden dann direkt nach der Analog- Digital-Wandlung von einem digitalen Rechner verarbeitet. Der ideale Sender sähe ähnlich aus: Ein Rechner erzeugt einen digitalen Datenstrom über einen Digital- Analog-Umsetzer und eine nachfolgende Antenne versendet diesen.

Funktionsprinzipien von SDRs

Heutige SDRs arbeiten nach einem von drei Funktionsprinzipien:

Direkte Digitalisierung des Eingangssignals

Nach einer möglichst sparsamen analogen Verarbeitung durch Filter und Vorverstärker oder Dämpfungsglieder wird das Eingangssignal direkt digitalisiert. Nach dem Nyquist-Theorem muss das Eingangssignal zum Digitalisieren mit mindestens der doppelten maximalen Nutzfrequenz abgetastet werden, um das Signal rekonstruieren zu können. Mittlerweile gibt es A/DUmsetzer mit Abtastfrequenzen bis zu 3,6 GSPS bei 12 bit-Auflösung. Damit sind Empfangsbereiche bis zu 1500 MHz möglich.

Digitalisierung auf Zwischenfrequenzebene

Die ersten Stufen eines solchen Empfängers unterscheiden sich wenig von einem herkömmlichen Überlagerungsempfänger. Die analogen Filter werden dabei für die größte benutzte Nutzsignal-Bandbreite ausgelegt. Das reduziert nicht nur die Anforderungen an die Großsignalfestigkeit der weiteren Verarbeitung, es ermöglicht auch ein drastisches Verringern der Abtastfrequenz: Bei einer Zwischenfrequenz-Bandbreite von z. B. 10 kHz reicht eine Abtastfrequenz von gut 20 kHz (Unterabtastung). Dieses Konzept ist mittlerweile weit verbreitet, weil ein hinreichend leistungsfähiger digitaler Signalprozessor (DSP) bedeutend billiger ist als diverse Quarzfilter mit den geforderten Bandbreiten. Zudem kann der DSP auch weitere Funktionen wie Verstärkungsregelung und Demodulation übernehmen - mit bedeutend besseren Eigenschaften und mehr Möglichkeiten als herkömmliche Analogtechnik.

Direktmischer nach dem I/Q-Verfahren

Direktmischempfänger ist ein Empfängerkonzept, bei dem das Eingangssignal mit einem Oszillatorsignal der gleichen Trägerfrequenz direkt gemischt und so demoduliert wird. So arbeitete schon ein Audion in den 1920er Jahren, wenn man Morsesignale empfangen wollte. Das Problem herkömmlicher Direktmischer ist die fehlende Spiegelfrequenzunterdrückung, d. h. ein Sinussignal 1 kHz unter der Oszillatorfrequenz liefert genau das gleiche Ausgangssignal wie ein Sinussignal 1 kHz über der Oszillatorfrequenz. Dieses Problem löst ein SDR durch "komplexe" Signalverarbeitung, d. h. durch Rechnen mit Real- und Imaginärteil welches auch als I/Q-Signal bezeichnet wird. Das I steht dabei für in Phase und den Realteil. Q steht für Quadrature und für den Imaginärteil des Signals. Dazu nutzt man im Eingangsteil des Direktmischer-Empfängers zwei parallele Mischstufen, deren Oszillatorsignale um 90° phasenverschoben sind. Solche Oszillatorsignale sind mit Digitaltechnik sehr einfach zu erzeugen. Die Ausgangssignale der beiden Mischer werden parallel digitalisiert und dann digital verarbeitet, wobei die Hilbert-Transformation eine zentrale Rolle spielt. Im Endeffekt bewirkt die Hilberttransformation eine frequenzabhängige Verzögerung ohne Beeinflussung der Signalamplitude, so dass das Signal um 90° in der Phase gedreht wird. Ein 1-kHz-Signal wird also um 250 $\mu$s verzögert, ein 10-kHz-Signal um 25 $\mu$s. Am Ende stehen zwei Direktüberlagerungssignale mit 0° Phasenverschiebung und mit 90° Phasenverschiebung zur Verfügung. Durch Addieren bzw. Subtrahieren der beiden Signale kann man zwischen den beiden Seitenbändern umschalten.

Ferner umfasst das System mindestens einen zweiten elektroakustischen Wandler, der mit einem Resonator elektrisch verbunden ist, wobei der erste elektroakustische Wandler und der zweite elektroakustische Wandler einen akustischen Kanal bilden und der zweite elektroakustische Wandler mit dem Resonator elektrisch verbunden ist und mit dem Resonator ein passives kooperatives Target bildet, welches beim Empfang eines Abfragesignals der Abfrageeinheit über den akustischen Kanal ein Antwortsignal sendet und das Abfragesignal eine höhere Energie aufweist als das Antwortsignal.

Auch kann ein erfindungsgemäßes System eine Abfrageeinheit umfassen, die eine softwaredefinierte Abfrageeinheit im Sinne des softwaredefinierten Radios ist. Auch kann bei einem erfindungsgemäßen System der erste und / oder der zweite elektroakustische Wandler ein, vorzugsweise bidirektionaler, Schallwandler, vorzugsweise für Ultraschall oder Infraschall, sein.

Bei einem erfindungsgemäßen System ist der Resonator ein Resonator mit einer hohen Güte ist.

Ferner kann bei einem erfindungsgemäßen System der Resonator zumindest einen Teil der Energie des Abfragesignals solange aufgrund der hohen Güte in sich speichert, bis eine umgebungsbedingte Signalreflektion des Abfragesignals abgeklungen ist.

Bei einem erfindungsgemäßen System kann der Resonator, vorzugsweise ein piezoelektrischer, Dünnschichtresonator, ein dielektrischer Resonator oder ein Quarzstimmgabelresonator sein.

Auch kann der Resonator ein Eintor-Resonator sein.

Ferner kann der Resonator im Sinne der Erfindung mindestens eine Resonanzfrequenz als Funktion einer Messgröße aufweisen, wobei die Resonanzfrequenz temperaturgangskompensiert ist.

Bei einem erfindungsgemäßen System hatte sich als besonders vorteilhaft erwiesen, wenn das Antwortsignal gegenüber dem Abfragesignal in der Frequenz verschoben ist.

Bei einem erfindungsgemäßen System ist das Abfragesignal, vorzugsweise als mindestens ein rechteckförmiger Abfrageimpuls und / oder ein Schwebungssignal und / oder ein frequenzmoduliertes Abfragesignal, von der Abfrageeinheit gesendet wird.

Ein Abfrageimpuls kann im Rahmen der Erfindung ein Impuls oder Signal mit rechteckiger Einhüllenden im Zeitbereich sein.

Ferner kann im Rahmen der Erfindung ein Abfrageimpuls ein Impuls oder Signal mit rechteckiger Amplitude im Zeitbereich sein.

Auch kann im Rahmen der Erfindung ein Abfrageimpuls ein Impuls oder Signal mit rechteckiger Leistung im Zeitbereich sein.

Ferner kann ein Abfragesignal im Rahmen der Erfindung ein Abfragesignal sein, dessen Frequenz mit einem weiten Beatsignal (Schwebungssignal oder auch Dither-Signal in der Fachliteratur genannt) periodisch erhöht und erniedrigt wird.

Wenn dieses frequenzmodulierte Abfragesignal jedesmal über die Resonanzfrequenz des Transponders fährt, so wird das Antwortsignal bei Resonanz erhöht und außerhalb erniedrigt. Die Einhüllende des Antwortsignals hat dabei die doppelte Frequenz wie das Beatsignal, da es ja sowohl bei der maximalen und auch bei der minimalen Frequenz abgesenkt wird. Wenn im Empfänger die Frequenz des Abfragesignals auf das Maximum der Zweiten Harmonischen der Beatfrequenz im Antwortsignal gelockt wird, kann eine PLL aufgebaut werden, die eine extrem genaue Messung erlaubt.

Im Sinne der Erfindung kann das frequenzmodulierte Signal in ein amplitudenmoduliertes Signal gewandelt werden. Die Einzelheiten dieser drahtlosen Umwandlung von Frequenzmodulation in Amplitudenmodulation durch Hochfrequenzresonatoren zur genauen Bestimmung der Resonanzfrequenz von passiven akustoelektronischen Sensoren auf Basis wobei die emittierten frequenzmodulierten Hochfrequenzimpulse von einem gepulsten Radar zur Abtastung eines oberflächenwellenbasierten Sensors erzeugt werden. Der scharfe Vorzeichenübergang des amplitudenmodulierten Empfangssignals liefert ein Signal, auf dem eine Rückkopplungsschleife zur Überwachung des Resonanzsignals eingeregelt ist.

Ein Resonator wirkt durch seine Übertragungsfunktion wie ein Frequenz-Amplituden-Modulations-Konverter. Durch Anregung eines Schmalband-Resonators von seiner Resonanzfrequenz weg mit einem FM Signal mit einer Rate von der Kreisfrequenz $\omega$ auf einer der Resonanzflanken ist das zurückgegebene Signal eine bei $\omega$ modulierte Amplitude. Bei Resonanzfrequenz, wobei der Koeffizient erster Ordnung für eine Polynomentwicklung der Übertragungsfunktion null wird und der Koeffizient zweiter Ordnung dominant wird, wird die Frequenzmodulation bei $\omega$ zu einer Amplitudenmodulation bei $2\omega$, mit einem Beitrag bei $\omega$ nahe Null. Oberhalb der Resonanzfrequenz wird die Frequenzmodulation bei $\omega$ wieder zu einer Amplitudenmodulation bei $\omega$, diesmal jedoch mit einer 90° Phasenverschiebung der Amplitudenmodulation gegenüber dem Frequenzmodulationssignal gegenüber dem vorherigen Fall.

Im Rahmen der Erfindung kann bei einem System das Abfragesignal, vorzugsweise als mindestens ein rechteckförmiger Abfrageimpuls, von einer Signalquelle gesendet werden, welches nicht die Abfrageeinheit ist.

Bei einem erfindungsgemäßen System umfasst das passive kooperative Target keine aktiven elektronischen Bauelemente. Das hat den Vorteil, dass das System in rauen Bedingungen wie beispielsweise in einem Umfeld mit sehr hohen Temperaturen, oder auch unter Wasser einsetzbar ist.

Bei einem erfindungsgemäßen System umfasst das passive kooperative Target keine eigene Energiequelle umfasst. Das hat zum Vorteil, dass keine Batterie benötigt wird. Auch ist es nicht nötig Energie über induktive Übertragung oder über sogenannte near field communication (nfc Systeme) zu übertragen. Damit ist das System vollständig energieautonom und kann in rauen Bedingungen wie beispielsweise in einem Umfeld mit sehr hohen Temperaturen, oder auch unter Wasser eingesetzt werden.

Ferner generiert bei einem erfindungsgemäßen System das passive kooperative Target seine zum Senden des Antwortsignals benötigte Energie über den akustischen Kanal aus dem Abfragesignal. Damit ist das System vollständig energieautonom und kann in rauen Bedingungen wie beispielsweise in einem Umfeld mit sehr hohen Temperaturen, oder auch unter Wasser eingesetzt werden.

Die Einsetzbarkeit eines erfindungsgemäßen Systems unter Wasser sowie auch in einer Umgebung bei der beispielsweise eine Komponente des Systems, nämlich entweder die Abfrageeinheit oder das passive kooperative Target innerhalb eines faradayschen Käfigs sich befindet, ist dank des akustischen Kanals möglich. Dieser akustische Kanal im Sinne der Erfindung wird vorzugsweise aus akustischen Signalen gebildet, die in einem Frequenzbereich von 1 kHz bis 10 THz, vorzugsweise

einem ersten Frequenzbereich von 1 kHz bis 10 kHz, insbesondere 3 kHz bis 5 kHz, oder auch 5 kHz bis 10 kHz,

oder in einem zweiten Frequenzbereich von 10 kHz bis 50 kHz, insbesondere 10 kHz bis 19 kHz, oder auch 19 kHz bis 50 kHz, besonders bevorzugt 20 KHz bis 45 kHz oder 20 kHz bis 25 kHz oder 25 kHz bis 44 kHz oder 44 kHz bis 45 kHz.

einem dritten Frequenzbereich von 50 kHz bis 250 kHz, insbesondere 50 kHz bis 100 kHz, oder auch 100 kHz bis 250 kHz, oder

in einem vierten Frequenzbereich von 250 kHz bis 1 MHz, oder

in einem fünften Frequenzbereich von 1 MHz bis 10 MHz, oder

in einem sechsten Frequenzbereich von 10 MHz bis 100 MHz, oder

In einem siebten Frequenzbereich von 100 MHz bis 400 MHz, oder

in einem siebten Frequenzbereich von 400 MHz bis 600 MHz, oder

in einem achten Frequenzbereich von 600 MHz bis 900 MHz, oder

in einem neunten Frequenzbereich von 900 MHz bis 1 GHz, oder

in einem zehnten Frequenzbereich von 1 GHz bis 5 GHz, oder

in einem weiteren Frequenzbereich von 5 GHz bis 10 GHz, oder

auch in einem Frequenzbereich von 1 mHz bis zu 1 kHz, insbesondere 1 mHz bis 0,5 Hz, oder auch 0,5 Hz bis 1 Hz, insbesondere bevorzugt 1 Hz bis 500 Hz, insbesondere 1 Hz bis 100 Hz, vorzugsweise auch 70 Hz bis 95 Hz, oder auch 100 Hz bis 250 Hz, oder auch 250 Hz bis 1 kHz, sowie

in weiteren Frequenzbereichen von 20 Hz bis 20 kHz, oder 20 kHz bis 1 GHz, oder auch 1 GHz bis 10 THz liegen können.

Schall und/oder ultraschallgekoppeltes passives drahtloses

Schwingungssensorsystem

Diese Veröffentlichung stellt erstmals ein Instrumentierungsverfahren zur passiven Extraktion einer Resonanzfrequenz eines High-Q-Resonators über einen drahtlosen Ultraschall-Kanal vor. Als eine erste Anwendung wird eine passive drahtlose Temperaturmessung vorgestellt mit einem Nachweis des drahtlosen und passiven Betriebs der Vorrichtung. Temperaturauflösung von 0,17°C und ein Messbereich von 350 mm wurden gezeigt.

Passives drahtloses Erfassen ist ein Messverfahren, das eine analoge drahtlose Messung eines Wandlerelements ermöglicht.

Im Zeitalter des Internet-of-Things hat diese Technologie eine faire Chance aus der aktuellen Nischen der industriellen Sensortechnik für raue Umgebungen in den Mainstream-Markt aufzusteigen. Eine herkömmliche drahtlose Kommunikation basierend auf elektromagnetischer Wellenausbreitung ist in Situationen, in denen sich der Sensorknoten in einem leitfähigen Gehäuse, also Faraday'schen Käfig, befindet, unwirksam, weshalb ein Verfahren basierend auf Ultraschallausbreitung kürzlich in der Veröffentlichung von Hagelauer, A.; Ussmueller, T.; Weigel, R. SAW and CMOS RFID transponder-based wireless systems and their applications. In Proceedings of the 2012 IEEE International Frequency Control Symposium (FCS), Baltimore, MD, USA, 21-24 May 2012; pp. 1-6 vorgeschlagen wurde.

Dieses Prinzip der Ultraschallausbreitung wird beschrieben in seinen Einzelheiten in der Veröffentlichung von 1. Hagelauer, A.; Ussmueller, T.; Weigel, R. SAW and CMOS RFID transponder-based wireless systems and their applications. In Proceedings of the 2012 IEEE International Frequency Control Symposium (FCS), Baltimore, MD, USA, 21-24 May 2012; pp. 1-6. auf die sich hier ausdrücklich Bezug genommen wird.

Die hier vorgestellte Arbeit ist ein Versuch, einen Chip-freien Ansatz durch Anpassung eines Stimmgabelresonators mit einem Ultraschallwandler zu untersuchen. Zunächst wird auf das Konzept der drahtlosen Abfrage von High-Q-Resonatoren eingegangen, gefolgt von einer Beschreibung des Experiments, das folgende Hypothese testet: können Ultraschallwandler und Kristallresonatoren als passive Funksensoren verwendet werden? Das wird dann gefolgt von einer Charakterisierung des Sensorelements und eine anschliessende Analyse seiner Leistung.

**Konzept für das drahtlose Sensorsystem**

Ähnlich zu drahtlosem passiven Messen mit akustischen Oberflächenwellenbauelementen gekoppelten Antenne, basiert der vorgestellte Ansatz auf einer Zeitbereichstrennung des gesendeten und reflektierten Signals, wird in der Veröffentlichung von Reindl, L.; Scholl, G.; Ostertag, T.; Scherr, H.; Wolff, U.; Schmidt, F. Theory and application of passive SAW radio transponders as sensors. IEEE Trans. Ultrason. Ferroelectr. Freq. Control 1998, 45, 1281-1292. in seinen Einzelheiten bezüglich drahtlosem passiven Erfassen mit akustischen Oberflächenwellenbauelementen ausführlich beschrieben worauf hier ausdrücklich Bezug genommen wird, der vorgestellte Ansatz basiert auf einer Zeitbereichstrennung des gesendeten und reflektierten Signals. Das drahtlose Sensorsystem enthält ein Anregungs- und Empfangselement mit Signalverarbeitung am aktiven Teil und einen Transceiver mit einer oszillierenden Last auf dem passiven Sensorknoten. Der passive Sensorknoten besteht aus einem mit einem Abstrahlelement, d. h. einem Ultraschallwandler, elektrisch verbundenen Resonator. Gütefaktor, der Hauptgütefaktor für einen Resonator in dieser Anmeldung ist definiert als:

$$Q = \frac{\omega_0 W}{P}$$

wobei $\omega_0$ die Resonanzfrequenz, W die im Resonator gespeicherte Energie und P die Verlustleistung ist. Bei Resonatoren, die mit einem Abstrahlelement gekoppelt sind, ist die Verlustleistung aufgrund interner Material- und Widerstandsverluste gering, die Schwingzeit kann länger als Umgebungsechos sein, so dass eine kanalinvariante Messung der Resonanzfrequenz drahtlos möglich ist."

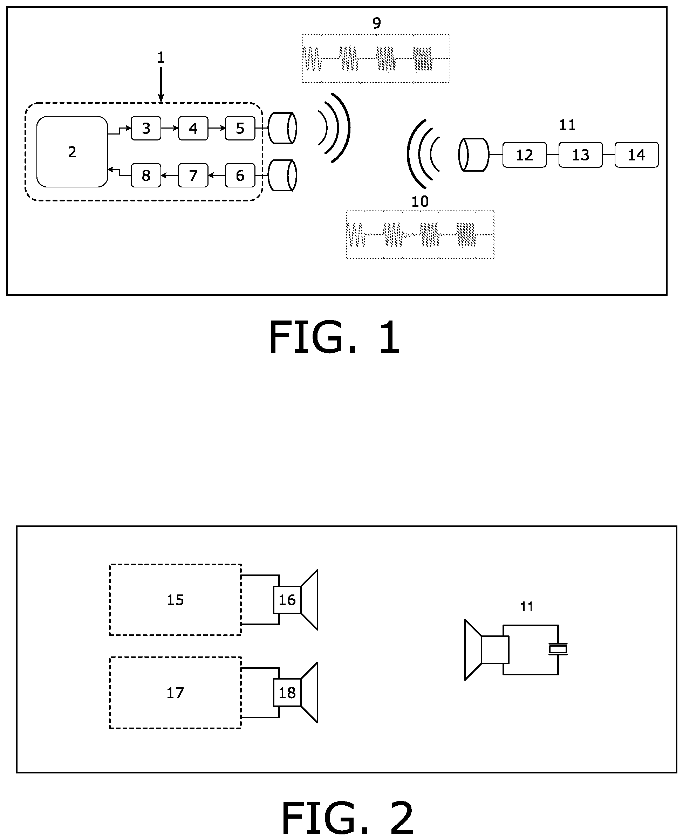

Figur 1 Grundkonzept eines drahtlosen Auslesens einer Resonanzfrequenz mittels Ultraschallwellenausbreitung.

Äußere Umwelteinflüsse wie Temperatur beeinflussen Materialeigenschaften wie der Steifigkeitstensor eines piezoelektrischen Resonators. Dies bewirkt eine Frequenzverschiebung der Resonanzmode, wie sie durch die harmonische Störtheorie erklärt wird. Dieser Effekt kann zur Temperaturmessung genutzt werden, passiv über eine drahtlose Verbindung und ist im Abschnitt 4 demonstriert.

Auch ist es im Rahmen der Erfindung möglich, einem passiven kooperativen Target ein Identifikationsmerkmal (eine ID) zuzuteilen um eine Identifikation zu ermöglichen und somit die Zuteilung eines Messwertes an eine bestimmte Messstelle zu ermöglichen. Einzelheiten über die Funktionsweise und Umsetzung der Signalabfrage und der Kodierung sowie der Art, Aufbau und Funktionsweise der Resonatoren eines solchen kombinierten Identifikations- und/oder Sensorsystems sind beschrieben in der DE 44 13 211 A1 auf die hier ausdrücklich Bezug genommen wird.

Ferner sind Einzelheiten über die Funktionsweise und Umsetzung der Signalabfrage und der Kodierung sowie der Art, Aufbau und Funktionsweise der Resonatoren eines solchen kombinierten Identifikations- und/oder Sensorsystems sind beschrieben in der US 5,691,698 auf die hier ausdrücklich Bezug genommen wird.

Ferner sind Einzelheiten über die Funktionsweise, Aufbau und Umsetzung der Abfrageeinheit sowie der Art, Aufbau und Funktionsweise der Schallwandler im Falle von Ultraschallwandler eines solchen kombinierten Identifikations- und/oder Sensorsystems beschrieben in der US 7,061,381 B2 auf die hier ausdrücklich Bezug genommen wird.

Ferner sind Einzelheiten über die Funktionsweise, Aufbau und Umsetzung der Abfrageeinheit, der Signalabfrage, der Signalaussendung des Abfragesignals sowie Art, Aufbau und Funktionsweise der Energiespeicherung innerhalb des Resonators im Falle des Empfangs von gestreuten Signalen aus der Umgebung mit einer längeren Laufzeit als das nicht gestreute ursprüngliche Abfragesignal im Falle elektromagnetischer Signale, welches analog in Hinblick auf das physikalische Streuprinzip von Signalen im Rahmen der Erfindung auf die Streuung akustischer Signale angewendet werden soll ausführlich in der DE 10 057 059 A1 beschrieben, auf die ausdrücklich Bezug genommen wird.

Konzeptentwurf

Der Hauptfokus für den Konzeptentwurf liegt auf der passiven Extraktion einer Resonanzfrequenz mit drahtloser Ultraschallabfrage. Dabei wird ein temperaturkompensierter Quartz-Stimmgabelresonator mit einem High-Q verwendet. Für die Realisierung des Sensorsystems wird später ein temperaturmessender Stimmgabelresonator in dieser Veröffentlichung vorgestellt. Der Instrumentierungsaufbau ist in Figur 2 dargestellt. die kommerziell erhältlichen elektronischen Komponenten weisen eine Mittenfrequenz von 40 kHz auf und wurden mit einer hochgenauen Impedanzmessung analysiert.

Figur 2 Messaufbau mit Laborausrüstung zum Konzeptentwurf mit einem Stimmgabelresonator.

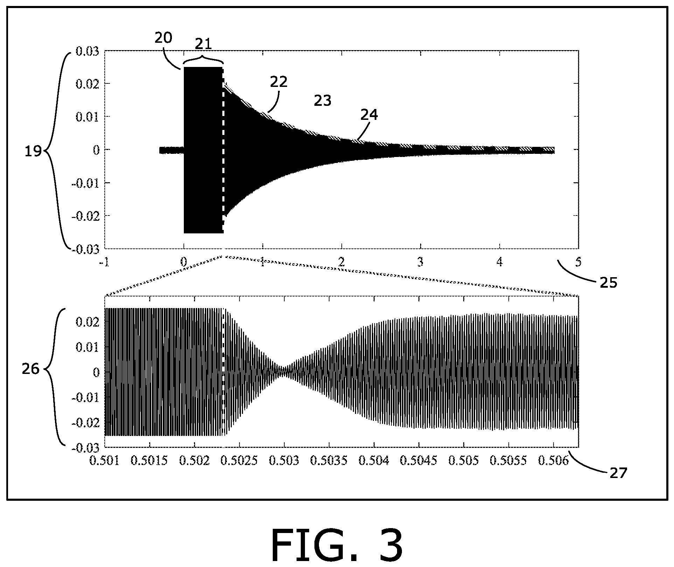

An den Sender wird ein Puls mit einer Weite von 0,5 s angelegt, woraus sich eine Bandbreite von 2,4 Hz um die Resonanz ergibt. Dadurch wird das Schwingen des High-Q-Resonators bewirkt, der eine Zeitbereichstrennung von Tx und Rx ermöglicht. Figur 3 stellt das gemessene Zeitbereichssignal am Ultraschallempfänger dar. Die Anregungsfrequenz klingt nach dem Burst in weniger als 2 ms ab und der High-Q-Resonator beginnt in seiner Resonanzfrequenz zu schwingen. Die Frequenzverschiebung von der Anregung auf die Resonanzfrequenz weist das vorgestellte Konzept auf. Ein rückgestreutes Signal könnte mit einer Kanalleistung von 36 dBmV über einen Abstand von 350 mm bei 100 ms Burst bei 2Vpp mit und SNR von 10 dB gemessen werden.

Figur 3. Rückgestreutes Signal: (a) Anregungsimpulsbreite von 0,502 s und Klingeln des High-Q-Faktor-Resonators bei Resonanzfrequenz mit Hüllkurvenanpassung (rot gestrichelt) zum Zerfall für die Q-Faktor-Berechnung; (b) Verschiebung von Anregungsfrequenz zu Resonanzfrequenz.

**Sensorcharakterisierung**

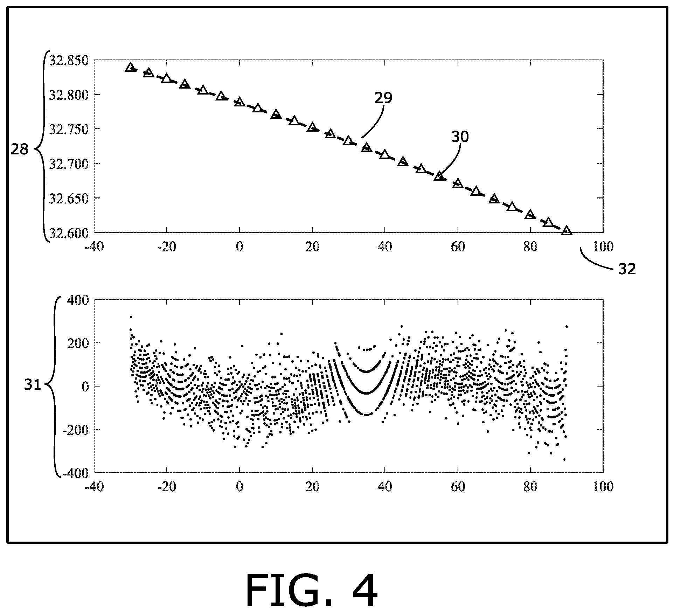

Als Sensor wird ein Temperaturmessoszillator (TSXO) verwendet, der als Stimmgabelresonator ausgebildet ist. Mit seinem High-Q-Faktor und einer niedrigen Frequenz im kHz-Bereich erreicht er lange Schwingzeiten. Für die Messung in Figur 4 wird in einer Klimakammer eine Temperaturrampe von -30°C bis + 90°C auf den Resonator angewendet. Er wird mit der Burst-Mode-Technik abgefragt und die temperaturabhängige Resonanzfrequenz mit einer eingeblendeten FFT im ungezwungenen Zeitrahmen gemessen, dargestellt in Figur 3a als roter Bereich. Die Anregungsfrequenz wird über die Temperaturrampe eingestellt, indem sie auf die zuvor erhaltene Resonanzfrequenz eingestellt wird, die Rückkopplungskette der vorgestellten digital gesteuerten Phasenregelschleife vervollständigt. Dieses Prinzip der Anregungsfrequenz wird über die Temperaturrampe eingestellt, indem sie auf die zuvor erhaltene Resonanzfrequenz eingestellt wird, die Rückkopplungskette der vorgestellten digital gesteuerten Phasenregelschleife vervollständigt bei messenden Oszillatoren oder Resonatoren wird beschrieben in seinen Einzelheiten in der Veröffentlichung von Pohl, A.; Ostermayer, G.; Seifert, F. Wireless sensing using oscillator circuits locked to remote high-Q SAW resonators. IEEE Trans. Ultrason. Ferroelectr. Freq. Control 1998, 45, 1161-1168 beschrieben auf die sich hier ausdrücklich Bezug genommen wird.

Figur 4: (a) Charakterisierung der Resonanzfrequenz des Sensorelements als Funktion der Temperatur mit quadratischer Passung (b) Reste der angepassten Kurve in mHz. Der TSXO zeigt ein quadratisches Temperaturverhalten bei einer Empfindlichkeit -1,94 Hz/°C bei 25°C. Die Ausgleichskurve weist einen Wert für R-Quadrat von 1,0 und 4,3552 als Norm der Residuen mit 1819 Punkten auf. Die Parabelmuster im Residuum legen nahe, dass der Hauptgrund für die Residuen auf den Quantisierungsfehler des Temperatursensors zurückzuführen ist, der als Referenz mit einer Auflösung von 0,1°C verwendet wird. Die aktuell verwendete FFT-Frequenzbandbreiteauflösung von 0,34 Hz begrenzt die Temperaturauflösung auf 0,17°C

Als Cramer Rao bound wie in der Veröffentlichung Kalinin, V. Comparison of frequency estimators for interrogation of wireless resonant SAW sensors. In Proceedings of the 2015 Joint Conference of the IEEE International Frequency Control Symposium & the European Frequency and Time Forum, Denver, CO, USA, 12-16 April 2015; pp. 498-503 in Bezug auf die Signalverarbeitung und Signalauswertung bei akustischen Bauelementen in seinen Einzelheiten beschrieben wird und worauf hier ausdrücklich Bezug genommen wird, ist deutlich geringer ist, kann eine bessere Auflösung für die Temperatur erreicht werden.

Schlussfolgerung

Diese Arbeit hat ein Messverfahren zur Extraktion einer Resonanzfrequenz eines High-Q-Resonators über einen drahtlosen Ultraschallkanal vorgestellt. Neben einem Konzeptentwurf des drahtlosen und passiven Betriebs der Vorrichtung wird eine passive drahtlose Temperaturmessung vorgestellt. Temperaturauflösung von 0,17°C und eine Messreichweite von 350 mm wurden gezeigt. Es hat sich gezeigt, dass eine Auslegung und Implementierung des vorgestellten Systems eine sorgfältige Abstimmung der Resonanzfrequenz und der Impedanz zwischen dem Wandler und dem Resonator erfordert. Zusätzlich und abhängig von den Geräuschpegeln der Umgebung muss der Q-Faktor des Resonators hoch sein (~ 100.000 ) zur präzisen drahtlosen Extraktion der Resonanzfrequenz. Die in diesem Beitrag vorgestellte neue drahtlose Erfassungstechnik weist signifikante Potentialanwendungen im Hinblick auf Messungen an bewegten Teilen auf, innerhalb geschlossener Hohlräume und in untergetauchten Umgebungen.

Die Erfindung wird nachfolgend anhand von in den Figuren dargestellten Ausführungsbeispielen näher erläutert. Es zeigt:

Figur 1 eine schematische Darstellung eines erfindungsgemäßen Systems mit einem softwaredefinierten Radar als Abfrageeinheit;

Figur 2 eine schematische Darstellung des Konzeptentwurfs Messaufbaus;

Figur 3 eine Zeitbereichsmessung des Empfangssignals (returned signal);

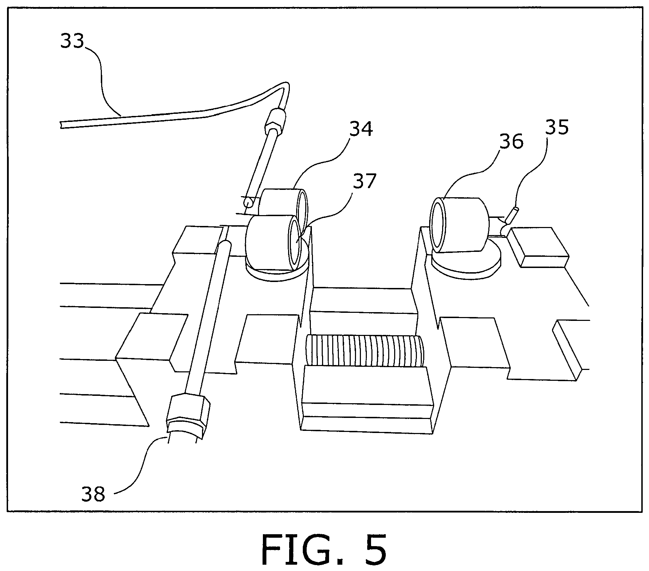

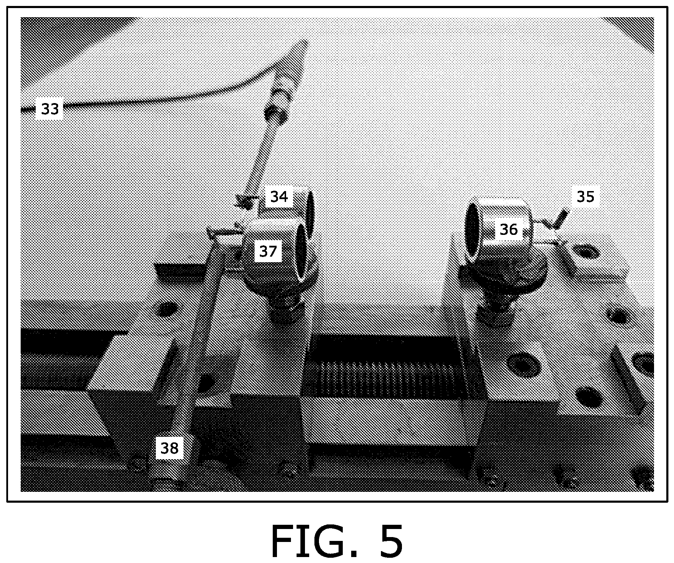

Figur 5 eine Abbildung eines Messaufbaus;

Figur 4 oben: Charakterisierung des Sensorelements in Abhängigkeit von der Temperatur.

Figur 4 unten: eine Empfangssignalanalyse.

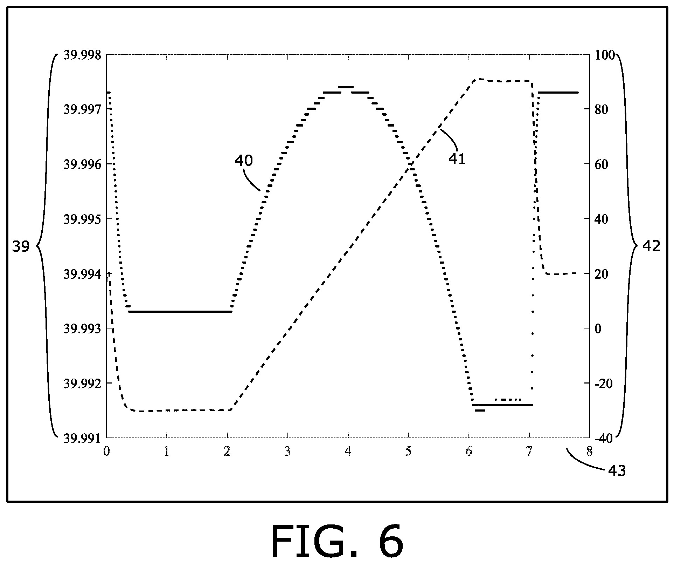

Figur 6 ein Meßdiagramm der Resonanzfrequenz gegenüber der Temperatur für einen 32,8 kHz Resonator;

Figur 1: Messaufbau mit einem Signalgenerator als softwaredefinierten Radar funktionierend als Abfrageeinheit zur Aussendung eines akustischen Signals über einen akustischen Wandler, hier als Ultraschallwandler ausgeführt. Der Ultraschallwandler sendet das akustische Signal über den akustischen Kanal zu dem weiteren akustischen Wandler, welcher mit einem Resonator als einem kooperativen passiven Target verbunden ist. Der Resonator speichert das empfangene Abfragesignal, respektive die Energie des akustischen Signals welches von dem elektroakustischen Wandler (nämlich dem Resonator) in elektrische Energie gewandelt wurde, solange bis Signale aus der Umgebung abgeklungen sind.

Anschließend wandelt der Resonator die elektrische Energie wieder in akustische Energie und sendet sie über den akustischen Kanal an den ersten akustischen Wandler. Drahtloser Versuchsaufbau: Diese Messung erfolgt in einem Abstand von 50 mm mit einer 10 Vss-Abfragequelle. Eine Reichweite von bis zu 1 km wurde von den Autoren erreicht.

Bezugszeichenliste

1 Software definiertes Ultraschallradar
2 Mikrokontroller
3 DAC
4 Filter
5 Tx AMP
6 Rx AMP
7 Filter
8 ADC
9 Tx Signal
10 Rx Signal
11 Ultraschall Sensor/Etikett
12 Anpassung
13 Resonator
14 Last
15 Funktionsgenerator Tektronix AFG3102
16 Ultraschall Sender
17 Oszilloskop Rohde&Schwarz RTO1044
18 Ultraschall Empfänger
19 Messspannung (V)
20 Anregungsfrequenz = 39995,20 Hz
21 Pulsdauer = 0,502 Sekunden
22 Resonanzfrequenz = 39996,56 Hz
23 Abklingzeit = 0,502 Sekunden
24 Gütefaktor = 101788
25 Zeit (s)
26 Messspannung (V)
27 Zeit (s)
28 Resonanzfrequenz (kHz)
29 32,718 kHz Resonator
30 Quadratische Kurvenanpassung
31 Residuen der quadratischen Kurvenanpassung (mHz)
32 Temperatur (°C)

33 Funktionsgenerator
34 Ultraschall Sender
35 Ultraschall Empfänger
36 Oszilloskop
37 Resonator
38 Ultraschallwandler
39 Ermittelte Resonanzfrequenz (kHz)
40 DUT Antwort
41 Pt100 Referenz
42 Temperatur (°C)
43 Zeit (Stunden)

**Patentansprüche**

1. System umfassend einen ersten elektroakustischen Wandler, der mit einer Abfrageeinheit verbunden ist, und mindestens einen zweiten elektroakustischen Wandler, der mit einem Resonator elektrisch verbunden ist, wobei der erste elektroakustische Wandler und der zweite elektroakustische Wandler einen akustischen Kanal bilden und der zweite elektroakustische Wandler mit dem Resonator elektrisch verbunden ist und mit dem Resonator ein passives kooperatives Target bildet, welches beim Empfang eines Abfragesignals der Abfrageeinheit über den akustischen Kanal ein Antwortsignal sendet und das Abfragesignal eine höhere Energie aufweist als das Antwortsignal.

2. System nach Anspruch 1, wobei die Abfrageeinheit eine softwaredefinierte Abfrageeinheit ist.

3. System nach Anspruch 1 oder 2, wobei der erste und / oder der zweite elektroakustische Wandler ein, vorzugsweise bidirektionaler, Schallwandler, vorzugsweise für Ultraschall oder Infraschall, ist.

4. System nach einem der Ansprüche 1 bis 3, wobei der Resonator ein Resonator mit einer hohen Güte ist.

5. System nach einem der Ansprüche 1 bis 4, wobei der Resonator zumindest einen Teil der Energie des Abfragesignals solange aufgrund der hohen Güte in sich speichert, bis eine umgebungsbedingte Signalreflektion des Abfragesignals abgeklungen ist.

6. System nach einem der Ansprüche 1 bis 5, wobei der Resonator ein, vorzugsweise piezoelektrischer, Dünnschichtresonator, in dielektrischer Resonator oder ein Quarzstimmgabelresonator ist.

7. System nach einem der Ansprüche 1 bis 6, wobei der Resonator ein Eintor-Resonator ist.

8. System nach einem der Ansprüche 1 bis 7, wobei der Resonator mindestens eine Resonanzfrequenz als Funktion einer Messgröße aufweist.

9. System nach Anspruch 8, wobei die Resonanzfrequenz temperaturgangskompensiert ist.

10. System nach einem der Ansprüche 1 bis 9, wobei das Antwortsignal gegenüber dem Abfragesignal in der Frequenz verschoben ist.

11. System nach einem der Ansprüche 1 bis 10, wobei das Abfragesignal, vorzugsweise als mindestens ein rechteckförmiger Abfrageimpuls und / oder ein Schwebungssignal und / oder eine frequenzmoduliertes Abfragesignal, von der Abfrageeinheit gesendet wird.

12. System nach einem der Ansprüche 1 bis 11, wobei das Abfragesignal, vorzugsweise als mindestens ein rechteckförmiger Abfrageimpuls, von einer Signalquelle gesendet wird, welches nicht die Abfrageeinheit ist.

13. System nach einem der Ansprüche 1 bis 12, wobei das passive kooperative Target keine aktiven elektronischen Bauelemente umfasst.

14. System nach einem der Ansprüche 1 bis 13, wobei das passive kooperative Target keine eigene Energiequelle umfasst.

15. System nach einem der Ansprüche 1 bis 14, wobei das passive kooperative Target seine zum Senden des Antwortsignals benötigte Energie über den akustischen Kanal aus dem Abfragesignal generiert.

16. System nach einem der Ansprüche 1 bis 15, wobei der der akustische Kanal in einem Frequenzbereich von 1 kHz bis 10 THz, vorzugsweise

in einem ersten Frequenzbereich von 1 kHz bis 10kHz, insbesondere 3 kHz bis 5 kHz, oder auch 5 kHz bis 10 kHz,
oder in einem zweiten Frequenzbereich von 10 kHz bis 50 kHz, insbesondere 10 kHz bis 19kHz, oder auch 19 kHz bis 50 kHz, besonders bevorzugt 20 KHz bis 45 kHz oder 20 kHz bis 25 kHz oder 25 kHz bis 44 kHz oder 44 kHz bis 45 kHz,
einem dritten Frequenzbereich von 50 kHz bis 250 kHz, insbesondere 50 kHz bis 100 kHz, oder auch 100 kHz bis 250 kHz, oder
in einem vierten Frequenzbereich von 250 kHz bis 1 MHz, oder
in einem fünften Frequenzbereich von 1 MHz bis 10 MHz, oder
in einem sechsten Frequenzbereich von 10 MHz bis 100 MHz, oder
in einem siebten Frequenzbereich von 100 MHz bis 400 MHz, oder
in einem achten Frequenzbereich von 400 MHz bis 600 MHz, oder

in einem neunten Frequenzbereich von 600 MHz bis 900 MHz,
oder in einem zehnten Frequenzbereich von 900 MHz bis 1 GHz,
oder
in einem elften Frequenzbereich von 1 GHz bis 5 GHz, oder
in einem weiteren Frequenzbereich von 5 GHz bis 10 GHz, oder
auch in einem Frequenzbereich von 1 mHz bis zu 1 kHz, insbesondere 1 mHz bis 0,5 Hz, oder auch 0,5 Hz bis 1 Hz, insbesondere bevorzugt 1 Hz bis 500 Hz, insbesondere 1 Hz bis 100 Hz, vorzugsweise auch 70 Hz bis 95 Hz, oder auch 100 Hz bis 250 Hz, oder auch 250 Hz bis 1 kHz, sowie
in weiteren Frequenzbereichen von 20 Hz bis 20 kHz, oder 20 kHz bis 1 GHz, oder auch 1 GHz bis 10 THz liegt.

**Claims**

1. System comprising a first electroacoustic transducer connected to an interrogation unit and at least one second electroacoustic transducer electrically connected to a resonator, wherein the first electroacoustic transducer and the second electroacoustic transducer form an acoustic channel and the second electroacoustic transducer is electrically connected to the resonator and forms with the resonator a passive cooperative target which, upon receiving an interrogation signal from the interrogation unit, transmits a response signal via the acoustic channel, and the interrogation signal has a higher energy than the response signal.

2. System according to claim 1, wherein the interrogation unit is a software defined interrogation unit.

3. System according to claim 1 or 2, wherein the first and / or the second electroacoustic transducer is a, preferably bidirectional, transducer, preferably for ultrasound or infrasound.

4. System according to any one of the claims 1 to 3, wherein the resonator is a resonator with a high Q-factor.

5. System according to any one of the claims 1 to 4, wherein the resonator stores at least a part of the energy of the interrogation signal due to the high Q-factor until an environmentally induced signal reflection of the interrogation signal has decayed.

6. System according to any one of the claims 1 to bis 5, wherein the resonator is a thin-film resonator, a piezoelectric thin-film resonator, a dielectric resonator, or a quartz tuning fork resonator.

7. System according to any one of the claims 1 to 6, wherein the resonator is a single-port resonator.

8. System according to any one of the claims 1 to 7, wherein the resonator has at least one resonance frequency as a function of a measured variable.

9. System according to claim 8, wherein the resonance frequency is temperature-response compensated.

10. System according to any one of the claims 1 to 9, wherein the response signal is shifted in frequency relative to the interrogation signal.

11. System according to any one of the claims 1 to 10, in the interrogation signal, preferably as at least one rectangular interrogation pulse and/or a beat signal and / *or* a frequency-modulated interrogation signal, is transmitted by the interrogation unit.

12. System according to any one of the claims 1 to 11, wherein the interrogation signal is transmitted, preferably as at least one rectangular interrogation pulse, from a signal source which is not the interrogation unit.

13. System according to any one of the claims 1 to 12, wherein the passive cooperative target does not comprise active electronic components.

14. System according to any one of the claims 1 to 13, wherein the passive cooperative target does not comprise its own energy source.

15. System according to any one of the claims 1 to 14, wherein the passive cooperative target generates its energy required to transmit the response signal from the interrogation signal via the acoustic channel.

16. System according to any one of the claims 1 to 15, wherein the acoustic channel is located in a frequency range from 1 kHz to 10 THz,

preferably
in a first frequency range from 1 kHz to 10 kHz, in particular 3 kHz to 5 kHz, or also 5 kHz to 10 kHz, or in a second frequency range from 10 kHz to 50 kHz, in particular 10 kHz to 19 kHz, or also 19 kHz to 50 kHz, particularly preferably 20 kHz to 45 kHz or 20 kHz to 25 kHz or 25 kHz to 44 kHz or 44 kHz to 45 kHz,
a third frequency range from 50 kHz to 250 kHz, in particular 50 kHz to 100 kHz, or also 100 kHz to 250 kHz, or
in a fourth frequency range from 250 kHz to 1 MHz, or

in a fifth frequency range from 1 MHz to 10 MHz, or

in a sixth frequency range from 10 MHz to 100 MHz, or

in a seventh frequency range from 100 MHz to 400 MHz, or

in an eighth frequency range from 400 MHz to 600 MHz, or

in a ninth frequency range from 600 MHz to 900 MHz, or

in a tenth frequency range from 900 MHz to 1 GHz, or

in an eleventh frequency range from 1 GHz to 5 GHz, or

in an expanded frequency range from 5 GHz to 10 GHz, or

in a frequency range from 1 mHz to 1 kHz, in particular 1 mHz to 0.5 Hz, or also 0.5 Hz to 1 Hz, in particular preferably 1 Hz to 500 Hz, in particular 1 Hz to 100 Hz, preferably also 70 Hz to 95 Hz, or also 100 Hz to 250 Hz, or also 250 Hz to 1 kHz, as well as

in further frequency ranges from 20 Hz to 20 kHz, or 20 kHz to 1 GHz, or also 1 GHz to 10 THz.

### Revendications

1. Système comprenant un premier transducteur électroacoustique connecté à une unité d'interrogation et au moins un deuxième transducteur électroacoustique connecté électriquement à un résonateur, dans lequel le premier transducteur électroacoustique et le second transducteur électroacoustique forment un canal acoustique et le second transducteur électroacoustique est connecté électriquement au résonateur et forme avec le résonateur une cible coopérative passive qui, à la réception d'un signal d'interrogation de l'unité d'interrogation, émet un signal de réponse par l'intermédiaire du canal acoustique, le signal d'interrogation ayant une énergie supérieure à celle du signal de réponse.

2. Système selon la revendication 1, dans lequel l'unité d'interrogation est une unité d'interrogation définie par logiciel.

3. Système selon la revendication 1 ou 2, dans lequel le premier et 1 ou le deuxième transducteur électroacoustique est un transducteur acoustique, de préférence bidirectionnel, de préférence pour des ultrasons ou des infrasons.

4. Système selon l'une quelconque des revendications 1 à 3, dans lequel le résonateur est un résonateur de haute qualité.

5. Système selon l'une des revendications 1 à 4, dans lequel le résonateur stocke en lui au moins une partie de l'énergie du signal d'interrogation en raison du facteur de qualité élevé jusqu'à ce qu'une réflexion du signal d'interrogation due à l'environnement se soit atténuée.

6. Système selon l'une quelconque des revendications 1 à 5, dans lequel le résonateur est un résonateur à couche mince, de préférence piézoélectrique, un résonateur diélectrique ou un résonateur à diapason en quartz.

7. Système selon l'une quelconque des revendications 1 à 6, dans lequel le résonateur est un résonateur à porte unique.

8. Système selon l'une quelconque des revendications 1 à 7, dans lequel le résonateur présente au moins une fréquence de résonance en fonction d'une grandeur de mesure.

9. Système selon la revendication 8, dans lequel la fréquence de résonance est compensée en fonction de la température.

10. **Système** selon l'une quelconque des revendications 1 à 9, dans lequel le signal de réponse est décalé en fréquence par rapport au signal d'interrogation.

11. Système selon l'une quelconque des revendications 1 à 10, dans lequel le signal d'interrogation, de préférence sous la forme d'au moins une impulsion d'interrogation rectangulaire et/ou un signal de battement et I ou un signal d'interrogation modulé en fréquence, est envoyé par l'unité d'interrogation.

12. Système selon l'une quelconque des revendications 1 à 11, dans lequel le signal d'interrogation, de préférence sous la forme d'au moins une impulsion d'interrogation rectangulaire, est envoyé par une source de signaux autre que l'unité d'interrogation.

13. Système selon l'une quelconque des revendications 1 à 12, dans lequel la cible coopérative passive ne comprend pas de composants électroniques actifs.

14. Système selon l'une quelconque des revendications 1 à 13, dans lequel la cible coopérative passive ne comprend pas sa propre source d'énergie.

15. Système selon l'une quelconque des revendications 1 à 14, dans lequel la cible coopérative passive génère son énergie nécessaire à l'émission du signal de réponse par l'intermédiaire du canal acoustique à partir du signal d'interrogation.

16. Système selon l'une quelconque des revendications 1 à 15, dans lequel le canal acoustique est situé dans une bande de fréquences de 1 kHz à 10 THz,

de préférence

dans une première bande de fréquences de 1 kHz à 10 kHz, en particulier de 3 kHz à 5 kHz, ou encore de 5 kHz à 10 kHz,

ou dans une deuxième bande de fréquences de 10 kHz à 50 kHz, en particulier de 10 kHz à 19 kHz, ou aussi de 19 kHz à 50 kHz, de préférence de 20 KHz à 45 kHz ou de 20 kHz à 25 kHz ou de 25 kHz à 44 kHz ou de 44 kHz à 45 kHz,

une troisième bande de fréquences de 50 kHz à 250 kHz, en particulier de 50 kHz à 100 kHz, ou aussi de 100 kHz à 250 kHz, ou

dans une quatrième bande de fréquences de 250 kHz à 1 MHz, ou dans une cinquième bande de fréquences de 1 MHz à 10 MHz, ou

dans une sixième bande de fréquences de 10 MHz à 100 MHz, ou dans une septième bande de fréquences de 100 MHz à 400 MHz, ou dans une huitième bande de fréquences de 400 MHz à 600 MHz, ou dans une neuvième bande de fréquences de 600 MHz à 900 MHz, ou dans une dixième bande de fréquences de 900 MHz à 1 GHz, ou

dans une onzième bande de fréquences de 1 GHz à 5 GHz, ou

dans une autre bande de fréquences de 5 GHz à 10 GHz, ou aussi dans une bande de fréquences de 1 mHz à 1 kHz, en particulier de 1 mHz à 0,5 Hz, ou aussi de 0,5 Hz à 1 Hz, de préférence de 1 Hz à 500 Hz, en particulier de 1 Hz à 100 Hz, de préférence aussi de 70 Hz à 95 Hz, ou aussi de 100 Hz à 250 Hz, ou aussi de 250 Hz à 1 kHz, ainsi que dans d'autres bandes de fréquences de 20 Hz à 20 kHz, ou de 20 kHz à 1 GHz, ou aussi de 1 GHz à 10 THz.

# FIG. 1

# FIG. 2

# FIG. 3

# FIG. 4

FIG. 5

FIG. 5

FIG. 6

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 2010066496 A1
- DE 4413211 A1
- US 5691698 A
- US 7061381 B2
- DE 10057059 A1


**In der Beschreibung aufgeführte Nicht-Patentliteratur**

- **HAGELAUER, A.** ; **USSMUELLER, T.** ; **WEIGEL, R.** SAW and CMOS RFID transponder-based wireless systems and their applications. *Proceedings of the 2012 IEEE International Frequency Control Symposium (FCS), Baltimore, MD, USA*, 1-6
- **HAGELAUER, A.** ; **USSMUELLER, T.** ; **WEIGEL, R**. SAW and CMOS RFID transponder-based wireless systems and their applications. *Proceedings of the 2012 IEEE International Frequency Control Symposium (FCS), Baltimore, MD, USA*, 21 May 2012, 1-6
- **REINDL, L.** ; **SCHOLL, G.** ; **OSTERTAG, T.** ; **SCHERR, H.** ; **WOLFF, U.** ; **SCHMIDT, F.** Theory and application of passive SAW radio transponders as sensors. *IEEE Trans. Ultrason. Ferroelectr. Freq. Control*, 1998, vol. 45, 1281-1292
- **POHL, A.** ; **OSTERMAYER, G.** ; **SEIFERT, F.** Wireless sensing using oscillator circuits locked to remote high-Q SAW resonators. *IEEE Trans. Ultrason. Ferroelectr. Freq. Control*, 1998, vol. 45, 1161-1168
- **KALININ, V.** Comparison of frequency estimators for interrogation of wireless resonant SAW sensors. *Proceedings of the 2015 Joint Conference of the IEEE International Frequency Control Symposium & the European Frequency and Time Forum, Denver, CO, USA*, 12 April 2015, 498-503